(19) **Europäisches Patentamt European Patent Office Office européen des brevets**

(11) **EP 3 842 970 B1**

(12) **FASCICULE DE BREVET EUROPEEN**

(45) Date de publication et mention de la délivrance du brevet:
**20.07.2022 Bulletin 2022/29**

(21) Numéro de dépôt: **20216967.8**

(22) Date de dépôt: **23.12.2020**

(51) Classification Internationale des Brevets (IPC):
**G06F 21/34** *(2013.01)* **H04L 9/00** *(2022.01)*

(52) Classification Coopérative des Brevets (CPC):
**H04L 63/0853; G06F 21/34**

(54) **PROCÉDÉ DE VÉRIFICATION DU MOT DE PASSE D'UN DONGLE, PROGRAMME D'ORDINATEUR, DONGLE ET TERMINAL UTILISATEUR ASSOCIÉS**

**VERFAHREN ZUR ÜBERPRÜFUNG DES PASSWORTS EINES DONGLES, ENTSPRECHENDES COMPUTERPROGRAMM, BENUTZERENDGERÄT UND ENTSPRECHENDER DONGLE**

**METHOD FOR CHECKING THE PASSWORD OF A DONGLE, ASSOCIATED COMPUTER PROGRAM, DONGLE AND USER TERMINAL**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **24.12.2019 FR 1915543**

(43) Date de publication de la demande:
**30.06.2021 Bulletin 2021/26**

(73) Titulaire: **THALES**
**92400 Courbevoie (FR)**

(72) Inventeurs:
• **LEFRANC, David**
**92230 GENEVILLIERS (FR)**
• **GARRIDO, Eric**
**92230 GENEVILLIERS (FR)**
• **DUBOIS, Renaud**
**92622 GENNEVILLIERS CEDEX (FR)**

(74) Mandataire: **Lavoix**
**2, place d'Estienne d'Orves**
**75441 Paris Cedex 09 (FR)**

(56) Documents cités:
**WO-A1-2011/003722 WO-A1-2017/117520 US-B1- 10 469 487**

**EP 3 842 970 B1**

**Description**

La présente invention concerne le domaine de la vérification du mot de passe d'un dongle.

La présente invention se rapporte à un procédé de vérification du mot de passe d'un dongle, comprenant suite à la connexion dudit dongle à un terminal utilisateur associé, une étape de réception par un premier module électronique de traitement du dongle, d'un mot de passe à valider saisi par un utilisateur requérant l'accès au terminal utilisateur.

On connait du document WO 2011/03722 A1 un procédé de gestion d'un module de sécurité virtuel embarqué dans une clé de stockage. On connait également du document US 10 469 487 B1 un procédé de génération de jeton d'échange de clés authentifiées. On connait en outre du document WO 2017/117520 A1 un procédé de sécurisation de mot de passe pour la communication entre deux systèmes électroniques.

Il est connu de stocker préalablement le résultat, H, d'une fonction de hachage du mot de passe d'un dongle dans la mémoire de ce dernier. Ultérieurement, lorsqu'un utilisateur porteur de ce dongle connecte ce dernier à un terminal utilisateur et saisit le mot de passe, ce mot de passe saisi est communiqué par le terminal utilisateur au dongle, qui applique la fonction de hachage à ce mot de passe saisi et qui compare le résultat au haché H en mémoire.

Toutefois, si un attaquant extrait la valeur hachée H de la mémoire du dongle, il peut alors effectuer une recherche exhaustive sur son ordinateur en cherchant le mot de passe dont le hachage donne H.

L'attaquant peut aussi tester des mots de passe, jusqu'à trouver le bon mot de passe, en échangeant directement avec le dongle s'il réussit à en disposer. Il est certes possible de mettre un compteur de ratification dans le dongle qui bloque toute nouvelle tentative de fourniture de mot de passe au-delà d'un seuil ; mais l'attaquant peut également réussir à modifier le seuil du compteur.

Il existe donc un besoin de disposer d'un procédé de vérification du mot de passe d'un dongle présentant un niveau de sécurité accru.

A cet effet, suivant un premier aspect, l'invention propose un procédé de vérification du mot de passe d'un dongle selon la revendication 1.

L'invention permet ainsi de proposer une solution de contrôle du mot de passe d'un dongle qui, en faisant participer le terminal utilisateur, diminue nettement les risques que le mot de passe du dongle puisse être découvert. Dans des modes de réalisation, un procédé de vérification du mot de passe d'un dongle est selon l'une des revendications 2 à 7.

Suivant un deuxième aspect, la présente invention propose un programme d'ordinateur selon la revendication 8.

Suivant un troisième aspect, la présente invention propose un dongle selon la revendication 9.

Suivant un quatrième aspect, la présente invention propose un ensemble selon la revendication 10.

Ces caractéristiques et avantages de l'invention apparaîtront à la lecture de la description qui va suivre, donnée uniquement à titre d'exemple, et faite en référence aux dessins annexés, sur lesquels :

- la figure 1 représente une vue schématique d'un système électronique dans un mode de réalisation de l'invention ;
- la figure 2 est une vue d'un ensemble comportant un terminal utilisateur avec lequel un dongle est mis en connexion dans un mode de réalisation de l'invention ;
- la figure 3 est un organigramme d'étapes mises en œuvre dans une étape préalable dans un mode de réalisation de l'invention ; et
- la figure 4 est un organigramme d'étapes mises en œuvre dans une étape opérationnelle dans un mode de réalisation de l'invention.

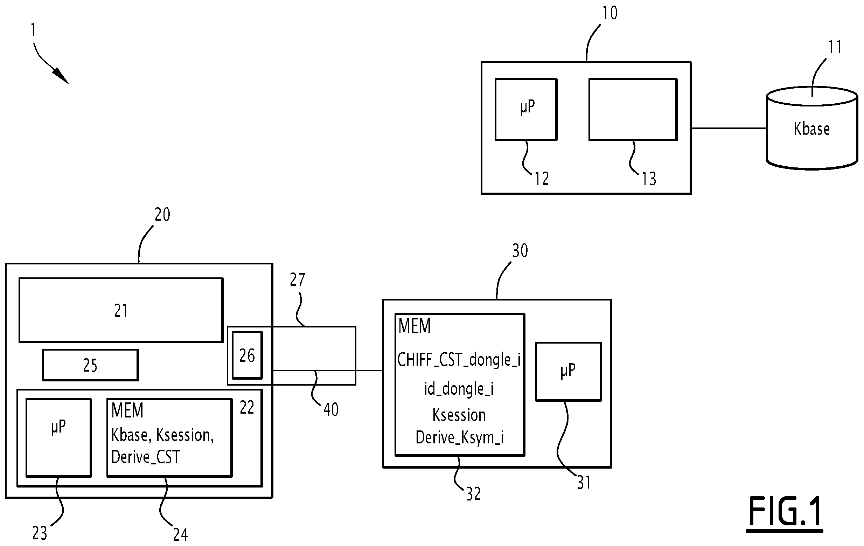

La figure 1 représente un système 1 dans un mode de réalisation. Le système 1 comporte M terminaux utilisateurs 20, N dongles 30 et un dispositif électronique de configuration 10 associé à une base de données 11.

Un seul dongle 30 et un seul terminal utilisateur 20 sont représentés en figure 1 ; M et N sont deux entiers supérieurs ou égaux à 1.

Le dispositif de configuration 10 comporte par exemple un processeur 12 et une mémoire 13.

Le dispositif de configuration 10 est par exemple disposé au sein d'une unité de configuration de terminaux utilisateurs à accès sécurisé par dongle.

Dans le cas particulier, le terminal utilisateur 20 est par exemple un terminal radio adapté pour mettre en œuvre des radiocommunications radio de type ad hoc avec d'autres terminaux utilisateurs radios similaires, mais le terminal utilisateur peut être tout autre terminal utilisateur à accès sécurisé : ordinateur fixe monté sur rack, ordinateur portable, tablette, téléviseurs, un assistant numérique personnel (PDA) ou un smartphone ...

Le dongle 30, de façon connue, nommé aussi clé matérielle ou clef électronique, est un composant matériel qui a pour fonction de protéger un terminal utilisateur contre les piratages informatiques. Un dongle 30 prend typiquement la forme d'une carte à puce, ou d'une clef ; il est adapté pour être détenu par un utilisateur, et être interfacé par cet utilisateur à un terminal utilisateur 20, de façon amovible et temporaire, lorsque l'utilisateur souhaite utiliser (des fonctions spécifiques de) ce terminal utilisateur 20.

Dans le cas considéré, le dongle 30 comporte un microprocesseur 31 et une mémoire 32.

Le dongle 30 comporte évidemment un bloc d'interface (non représenté) avec le terminal utilisateur 20 permettant la mise en œuvre des échanges entre le dongle et le terminal utilisateur.

Le terminal utilisateur 20 comporte un bloc de contrôle d'accès 24, un bloc d'interface homme-machine IHM 25, comportant dans le cas considéré un écran et un clavier doté de chiffres et non de lettres, un bloc de traitement 21 et une interface de connexion 27 au dongle.

Le bloc de traitement 21 effectue un ensemble de fonctionnalités délivrées par le terminal utilisateur (forme d'onde, téléphonie, transmission de données ...).

Le bloc de contrôle d'accès 24 est adapté pour valider ou non un mot de passe saisi par un utilisateur après connexion du dongle 30 et du terminal utilisateur 30.

La connexion du dongle 30 avec le terminal 20 est réalisée par l'intermédiaire d'une interface de connexion 27 du terminal utilisateur 20.

Suivant les modes de réalisation, l'interface de connexion 27 comporte au moins un logement dans lequel le dongle est inséré : par exemple un lecteur de cartes à puce intégré, si le dongle est de type carte à puce, ou un port d'entrée- sorties du terminal 20 dans lequel le dongle est directement branché (par exemple port parallèle, port USB si le dongle est une clef USB) ou encore dans lequel un périphérique, représentant une extension amovible du terminal utilisateur, par exemple de type lecteur de carte à puce est branché, permettant une connexion au dongle 30.

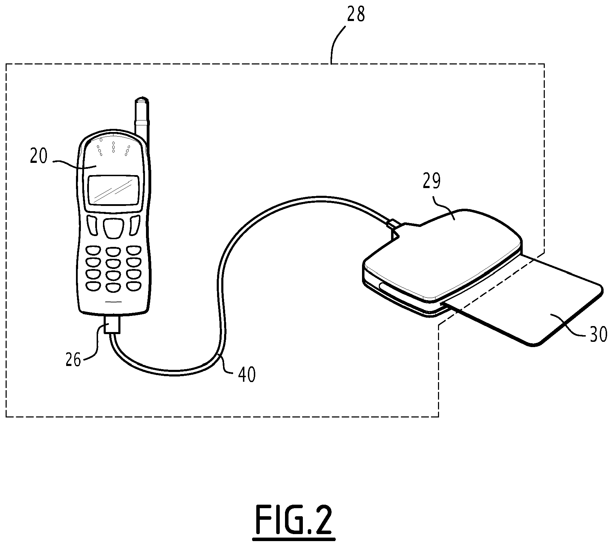

Dans le cas particulier considéré ici, le dongle 30 est une carte à puce et un équipement utilisateur 28, représenté en figure 2, comprend le terminal utilisateur 20, un périphérique 29 de type lecteur de carte à puce branché via un câble 40 dans un connecteur 26 du terminal utilisateur 20 et le dongle 30 qui est représenté inséré dans le périphérique 29, de manière à permettre les échanges entre le terminal utilisateur 20, le lecteur 29 et le dongle 30.

Ainsi dans ce cas particulier, l'interface de connexion 27 comporte notamment le lecteur 29, le connecteur 26, le câble 40.

Le lecteur 29 comporte une interface homme machine, par exemple un clavier, comportant les lettres de l'alphabet et les chiffres, permettant la saisie d'un mot de passe. Cette interface homme-machine du lecteur est considérée comme une extension de l'interface IHM 25 du terminal radio 20. Le lecteur 29 comporte en outre une interface de communication avec le dongle 30 une fois ce dernier inséré dans le lecteur et une interface de communication avec le terminal 20.

Comme il est connu, un tel dongle 30 permet de sécuriser l'accès à terminal utilisateur, ou au moins à certaines des fonctions accessibles depuis ce terminal utilisateur à l'aide d'un dongle associé à un mot de passe : seul un utilisateur qui à la fois possède le dongle 30 et fournit le mot de passe du dongle va être autorisé par le terminal utilisateur à utiliser des fonctionnalités F accessibles depuis le terminal utilisateur et fournies par le bloc de traitement 21.

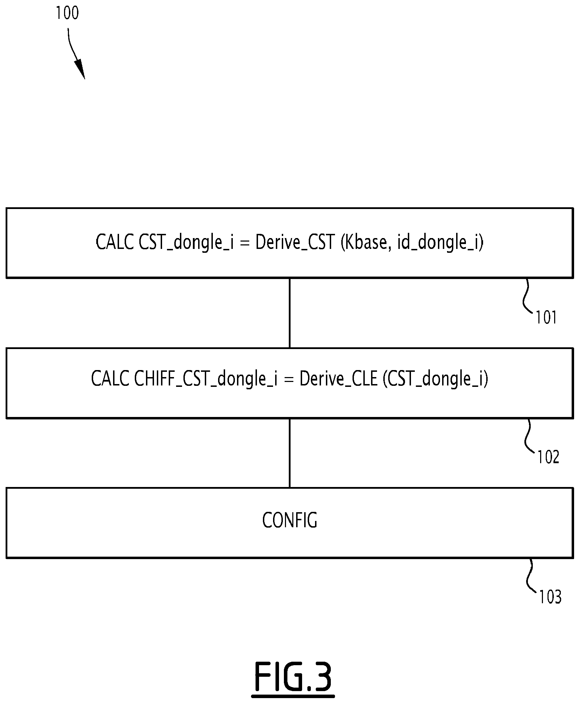

Dans un mode de réalisation, la mémoire 13 comprend des instructions logicielles, qui lorsqu'elles sont exécutées sur le processeur 12, mettent en œuvre automatiquement les étapes incombant au dispositif de configuration 10 décrites en référence à la figure 3.

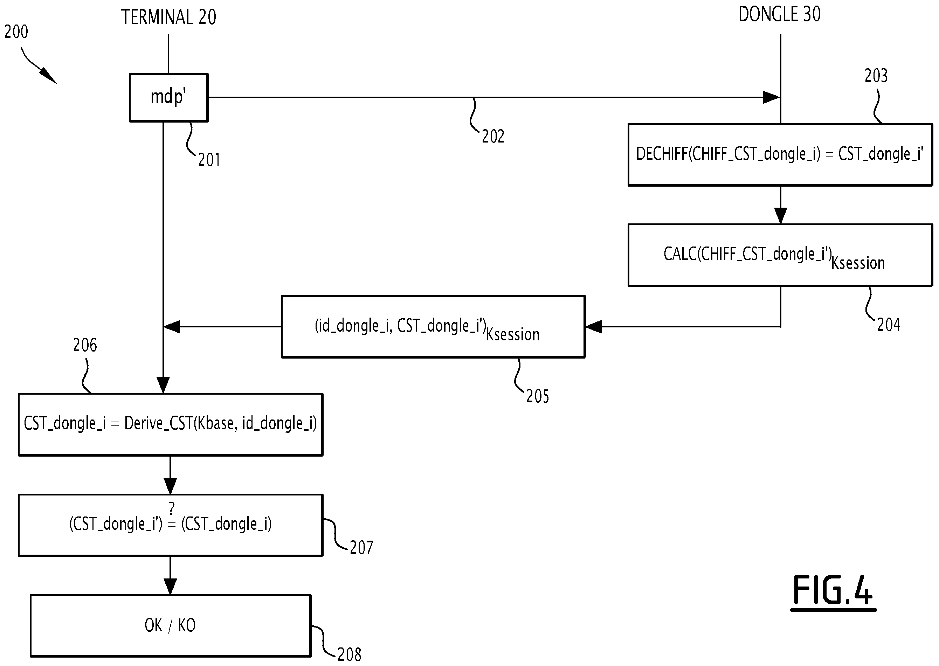

Dans un mode de réalisation, la mémoire 22 comprend des instructions logicielles, qui lorsqu'elles sont exécutées sur le processeur 23, mettent en œuvre automatiquement les étapes incombant au bloc de contrôle d'accès 24 décrites en référence à la figure 4.

Dans un mode de réalisation, la mémoire 32 comprend des instructions logicielles, qui lorsqu'elles sont exécutées sur le processeur 31, mettent en œuvre automatiquement les étapes incombant au dongle 30 décrites en référence à la figure 4.

Dans un autre mode de réalisation, le dispositif de configuration 10 et/ou le bloc de contrôle d'accès 24 et/ou le dongle 30 est réalisé sous forme d'un composant logique programmable, tel qu'un FPGA (de l'anglais *Field Programmable Gate Array*), ou encore sous forme d'un circuit intégré dédié, tel qu'un ASIC (de l'anglais

*Applications Specific Integrated Circuit).*

En figures 3 et 4 sont présentées des étapes d'un procédé de contrôle des mots de passe de dongles dans un mode de réalisation de l'invention.

En figure 3 tout d'abord, un ensemble 100 d'étapes de configuration de chaque terminal utilisateur 20 et de chaque dongle 30 est préalablement mis en œuvre par le système de configuration 10. Le système 1 est donc un système maîtrisé, en cela qu'il est adapté pour pouvoir configurer préalablement les terminaux utilisateurs et les dongles.

Dans une étape 101, chaque dongle 30 n°i, i = 1 à N, étant identifié par un identifiant nommé id_dongle_i et stocké dans sa mémoire 32, la base de données 11 du dispositif de configuration 10 stockant une clef cryptographique symétrique, nommée Kbase, et les identifiants id_dongle_i de chaque dongle i = 1 à N, le dispositif de configuration 10 calcule pour chaque dongle i un pseudo-aléa unique, noté CST_dongle_i, en appliquant un algorithme cryptographique, nommé Derive_CST( ; ).

L'algorithme Derive_CST est fonction de la clé cryptographique, nommée Kbase, et de l'identifiant, id_dongle_i :

$$CST\_dongle\_i = Derive\_CST(Kbase, id\_dongle\_i)$$

La fonction cryptographique utilisant la clé cryptographique Kbase est par exemple une fonction HMAC.

Dans une étape 102, le dispositif de configuration 10 génère (ou obtient) un mot de passe, noté mdp_dongle_i, pour chaque dongle 30 n°i.

Puis le dispositif de configuration 10 calcule une quantité cryptographique CHIFF_CST_dongle_i, via un algorithme de chiffrement noté CHIFF_CST() en confidentialité seule de la donnée CST_dongle_i à l'aide d'une clé symétrique, nommée Ksym_i dérivée du mot de passe mdp_dongle_i (et optionnellement de l'identifiant id_dongle_i) :

$$CHIFF\_CST\_dongle\_i = Derive\_CLE(CST\_dongle\_i) :$$

où Derive_CLE est la fonction cryptographique en confidentialité seule considérée.

L'algorithme de chiffrement en confidentialité seule est, par exemple, le mode CTR (*CounTeR*) ou CBC (*Cipher Block Chaining*) (cf. NIST Special Publication 800-38A Recommendation for Block 2001 Edition. Cipher Modes of Opération), en utilisant par exemple l'algorithme bloc de type AES (de l'anglais *Advanced Encryption Standard*) ; on note alors en général AES-CTR et AES-CBC.

La clé symétrique Ksym_i est ici une fonction de mdp_dongle_i (et ici optionnellement de l'identifiant id_dongle_i) : Ksym_i= DERIVE_Ksym_i (mdp_dongle_i ; id_dongle_i).

Dans un mode de réalisation, la fonction Ksym_i est par exemple :

- DERIVE_Ksym_i (mdp_dongle_i ) = mdp_dongle_i ; ou
- DERIVE_Ksym_i (mdp_dongle_i, ; id_dongle_i ) = mdp_dongle_i ‖ id_dongle_i ; ou
- DERIVE_Ksym_i (mdp_dongle_i ) = SHA (mdp_dongle_i) ; ou
- DERIVE_Ksym_i (mdp_dongle_i ; id_dongle_i) = SHA(mdp_dongle_i ‖ id_dongle_i).

Le dispositif de configuration 10 charge en mémoire 32 du dongle 30 n° i :

- la quantité CHIFF_CST_dongle_i ;
- la fonction algorithmique DERIVE_Ksym_i ;
- l'algorithme de déchiffrement en confidentialité seule noté DECHIFF_CST() de la donnée CHIFF_CST_dongle_i associé à l'algorithme de chiffrement en confidentialité seule de l'étape 102).

La génération du mot de passe mdp_dongle_i est effectuée selon des critères d'alphabet et de taille pour le dongle n°i.

Dans une étape 103, la clef Kbase, ainsi que la fonction algorithmique Derive_CST ( ; ) sont chargées dans la mémoire 24 de chaque terminal utilisateur 20 depuis le dispositif de configuration 10 (par une connexion filaire ou sans fil), configurant ainsi les terminaux utilisateurs avec cette clef secrète système commune aux terminaux utilisateurs.

Supposons maintenant que chaque terminal utilisateur 20 et chaque dongle 30 aient bien été configurés préalablement selon l'ensemble d'étapes 100.

En référence à la figure 4 qui illustre les étapes mettant en œuvre le terminal utilisateur 20 (et son lecteur de carte 29) et le dongle 30, considérons maintenant un utilisateur U ayant en sa possession un dongle 30, par exemple le dongle 30 n°i et qui souhaite accéder à un ensemble de fonctions F qui ne sont offertes, via le terminal utilisateur 20, que sur possession d'un dongle 30 et un contrôle d'accès mettant en œuvre ce dongle.

Dans une étape 201, l'utilisateur U insère le dongle 30 dans le lecteur 29 ; suite à la détection de cette connexion via le lecteur 29, le terminal 20 requiert, via l'IHM 25, que l'utilisateur U saisisse le mot de passe du dongle (à ce stade, l'utilisateur ne peut avoir accès aux fonctions F). L'utilisateur saisit, dans le cas considéré, via le clavier du lecteur 29, un mot de passe, noté ici mdp'. Le mot de passe saisi mdp' est transmis au dongle 30 dans une étape 202.

Dans une étape 203, le dongle 30 détermine la clé symétrique Ksym_i' en fonction du mot de passe mdp' et de la fonction DERIVE_Ksym_i( ;) figurant dans sa mémoire 32 (et optionnellement de l'identifiant id_dongle_i) : Ksym_i' = Ksym_i(mdp' ; id_dongle_i).

Puis le dongle 30 extrait la quantité CHIFF_CST_dongle_i de la mémoire 32 et déchiffre cette quantité via l'algorithme de déchiffrement en confidentialité seule (nommé DECHIFF_CST et correspondant à l'algorithme de chiffrement en confidentialité seule de l'étape 102) à l'aide de cette clé symétrique Ksym_i' dérivée du mot de passe mdp_dongle_i' :

$$CST\_dongle\_i' = DECHIFF\_CST(CHIFF\_CST\_dongle\_i)$$

Dans un mode de réalisation, le terminal utilisateur 20 et le dongle 30 disposent en outre d'une clé commune secrète de session Ksession, par exemple à usage unique, dans leur mémoire respective 22, 32 (négociée dynamiquement entre eux ou préalablement définie). Dans ce cas, dans une étape 204, le dongle 30 réalise une opération cryptographique par une fonction F(), par exemple un chiffrement ou un calcul de motif d'intégrité de la quantité CST_dongle_i' avec la clé de session Kession. La quantité calculée est notée F(Kession ; CST_dongle_i'). En cas de chiffrement, la donnée envoyée est le chiffré ; en cas de calcul d'un motif d'intégrité, c'est le motif calculé qui est uniquement envoyé.

Dans une étape 205, le dongle 30 délivre, via le lecteur 29, au terminal 20, outre son identifiant id_dongle_i, la quantité F(Kession ; CST_dongle_i').

A la réception de ces données, dans une étape 206, le terminal utilisateur 20 détermine CST_dongle_i, dans le cas présent en calculant à son tour CST_dongle_i, à partir de l'identifiant de dongle reçu, de la clé Kbase et de la fonction cryptographique Derive_CST( ; ) qui utilise cette clé Kbase (Kbase et l'algorithme de la fonction cryptographique Derive_CST ayant été stockés dans sa mémoire 22 dans la phase de configuration préalable) :

$$CST\_dongle\_i = Derive\_CST(Kbase, id\_dongle\_i)$$

Puis dans une étape 207, connaissant CST_dongle_i et Ksession, le terminal utilisateur peut vérifier que la valeur F(Kession ; CST_dongle_i') est cohérente. Par exemple, S'il s'agit d'un calcul de motif d'intégrité, le terminal utilisateur compare la donnée reçue avec son propre calcul de F(Kession ; CST_dongle_i). Alternativement, Si F() est une fonction de chiffrement, le terminal utilisateur déchiffre la quantité F(Kession ; CST_dongle_i') et compare CST_dongle_i' à CST_dongle_i.

Dans une étape 208, si les quantités comparées par le terminal 30 à l'étape 207 sont égales, alors par exemple un message confirmant que le mot de passe fourni mdp' par l'utilisateur à l'étape 201 est correct est fourni par le terminal 30 à l'utilisateur via l'IHM 25, par exemple, par affichage du message sur l'écran de l'IHM 25 du terminal 20.

Cette validation du mot de passe a pour effet que l'utilisateur a alors accès aux fonctions offertes par le terminal utilisateur 20, par exemple :

- accéder à des données sensibles, mémorisées dans le terminal utilisateur 20 ou accessibles via un réseau de télécommunication dont fait partie le terminal utilisateur 20 ;
- accéder à (une partie d') un réseau de télécommunication dont fait partie le terminal utilisateur 20 ;
- accéder à des commandes spécifiques sensibles ...

Si les quantités comparées à l'étape 207 ne sont pas égales, alors par exemple un message indiquant que le mot de passe fourni mdp' est incorrect est délivré par le terminal 30 à l'utilisateur via l'écran de l'IHM 25 et le terminal utilisateur 20 continue à empêcher l'accès de l'utilisateur aux fonctions.

Ainsi, selon l'invention, le terminal utilisateur joue un rôle actif dans la validation du mot de passe, ce qui permet de rendre impossible de retrouver le mot de passe par simple possession du dongle : l'invention offre une solution robuste, à base de cryptographie symétrique, avec une faible empreinte mémoire, pour fortement sécuriser l'accès à des fonctions d'un terminal utilisateur à l'aide d'un dongle associé à un mot de passe. Selon l'invention, le mot de passe peut en outre être choisi (i.e. il n'est pas obligatoirement le résultat d'une fonction mathématique).

Le mot de passe mdp_dongle_i n'est donc pas stocké dans le dongle 30, que ce soit en clair ou en chiffré.

Un attaquant qui souhaite retrouver le mot de passe peut tenter d'intercepter en mémoire du dongle le chiffré en confidentialité seule CHIFF_CST_dongle_i, mais il ne peut rien en faire puisque tout mot de passe permet de retrouver une quantité CST_dongle_i' différente dont la pertinence ne peut être testée via le seul dongle. Un attaquant qui souhaite retrouver le mot de passe d'un dongle doit, selon l'invention, nécessairement avoir accès à un terminal utilisateur pour avoir le statut de validité ou d'invalidité d'un mot de passe.

Dans un mode de réalisation, l'étape 205 a par exemple lieu au cours de la mise en œuvre d'un protocole normalisé d'échange interactif de clé de session, par exemple selon la norme « ISO/IEC 11770-3:2015 Information technology - Security techniques - Key management - Part 3: Mechanisms using asymmetric techniques » dans laquelle le dongle réalise l'étape de confirmation de clé. Dans cette étape de confirmation de clé, la Ksession correspond alors à la clé symétrique utilisée dans la confirmation de clé de la norme et la quantité CST_dongle_i correspond au « champ optionnel » ajoutable dans la confirmation de clé (cette norme suggère le calcul d'un motif d'intégrité).

Dans le mode de réalisation décrit ci-dessus, le terminal utilisateur et le dongle disposent d'une clé commune de session Ksession, à usage unique : si l'attaquant a enregistré les communications, il ne peut rien en faire.

Dans un autre mode de réalisation, cette clé de session n'est pas à usage unique.

Dans un autre mode de réalisation, l'échange entre le terminal utilisateur et le dongle à l'étape 205 n'est pas sécurisé par la Ksession : terminal utilisateur et le dongle n'utilisent pas de clé de session.

Dans le mode de réalisation décrit ci-dessus, la quantité CST_dongle_i est une quantité cryptographique dépendant de la clé système Kbase et de l'identifiant du dongle et la clé de système Kbase uniquement présente dans les terminaux 20 (ie pas dans les dongles 30). Dans un autre mode de réalisation, CST_dongle_i peut être ou non une quantité cryptographique, peut dépendre ou non d'une clef système et/ou de l'identifiant du dongle. Le terminal utilisateur doit stocker la quantité CST_dongle_i ou avoir les moyens de la recalculer quand il a à valider un mot de passe saisi.

Dans une mise en œuvre simple de l'invention, chaque terminal utilisateur 20 dispose d'un listing exhaustif (« une table de vérité ») dans lequel les quantités CST_dongle_i de chaque dongle sont écrites directement ; le terminal 20 n'a alors pas besoin de les recalculer par une fonction Derive_CST. Dans ce cas, le listing pourrait ne pas être toujours à jour si de nouveaux dongles sont créés et que les quantités CST_dongle_i n'ont pas toutes la même valeur. Une procédure de mise à jour du listing est donc à prévoir dans le parc de terminaux.

Alternativement que les constantes puissent effectivement être dérivées d'une fonction cryptographique utilisant une Kbase et/ou id_dongle évite de stocker le listing exhaustif et les mises à jour de listings.

Dans le cas considéré, les échanges entre le terminal utilisateur 20 et le dongle 30 sont mis en œuvre sur des liaisons de télécommunication de type filaire, mais des technologies de télécommunication sans fil peuvent être utilisées, par exemple de type NFC.

## Revendications

1. Procédé de vérification du mot de passe d'un dongle (30), comprenant suite à la connexion dudit dongle à un terminal utilisateur (20) associé, une étape de réception par un premier module électronique de traitement du dongle, d'un mot de passe à valider (mdp') saisi par un utilisateur requérant l'accès au terminal utilisateur, ledit procédé étant **caractérisé en ce qu'**il comprend en outre les étapes suivantes mises en œuvre par le module électronique de traitement (31) du dongle, une mémoire (32) du dongle stockant une première quantité cryptographique (CHIFF_CST_dongle_i) égale au résultat du chiffrement en confidentialité seule d'une première constante (CST_dongle_i) à l'aide d'une première clé symétrique (Ksym_i) dérivée cryptographiquement du mot de passe du dongle, la mémoire (32) du dongle (30) stockant en outre la fonction d'obtention de clé symétrique (DERIVE_Ksym( ; )):

   - détermination d'une deuxième clé symétrique (Ksym_i') par application de ladite fonction (DERIVE_Ksym( ; )) d'obtention de clé symétrique au mot de passe à valider reçu ;
   - obtention d'une deuxième constante (CST_dongle_i') par déchiffrement de la première quantité cryptographique (CHIFF_CST_dongle_i) stockée dans la mémoire du dongle à l'aide de la deuxième clé symétrique déterminée ; et
   - délivrance par le dongle d'un ensemble de données, dont une donnée déterminée en fonction de la deuxième constante (CST_dongle_i') à destination du terminal utilisateur, en vue de la validation par ce dernier du mot de passe saisi en fonction dudit ensemble de données et de la première constante (CST_dongle_i).

2. Procédé de vérification du mot de passe d'un dongle (30) selon la revendication 1, selon lequel ladite fonction d'obtention de clé symétrique (DERIVE_Ksym( ; )) est fonction en outre d'un identifiant du dongle, et selon lequel ladite deuxième clé symétrique est déterminée par le module de traitement du dongle par application de ladite fonction d'obtention de clé symétrique au mot de passe à valider reçu et à l'identifiant (id_dongle_i) du dongle stocké en mémoire (32) du dongle.

3. Procédé de vérification du mot de passe d'un dongle (30) selon la revendication 1 ou 2, selon lequel ladite donnée, dans l'ensemble de données délivré au terminal utilisateur (20), qui est déterminée en fonction de la deuxième constante comporte ladite deuxième constante chiffrée à l'aide d'une clé de session, et selon lequel ledit ensemble de données est inséré dans un champ de données spécifique d'un message transmis par le dongle au terminal utilisateur conformément à un protocole d'établissement de clef de session.

4. Procédé de vérification du mot de passe d'un dongle (30) selon la revendication 1 ou 2, selon lequel ladite donnée, dans l'ensemble de données délivré au terminal utilisateur (20), qui est déterminée en fonction de la deuxième constante, comporte un motif d'intégrité de la deuxième constante calculé à l'aide d'une clé de session, et selon lequel ledit ensemble de données est inséré dans un champ de données spécifique d'un message transmis par le dongle au terminal utilisateur conformément à un protocole d'établissement de clef de session.

**5.** Procédé de vérification du mot de passe d'un dongle (30) selon l'une quelconque des revendications précédentes, comprenant en outre les étapes suivantes mises en œuvre par un deuxième module électronique de traitement (24) du terminal utilisateur (20), des données représentatives de ladite première constante ayant été préalablement stockée dans une mémoire (22) du terminal utilisateur :

- réception de l'ensemble de données comprenant la donnée déterminée en fonction de ladite deuxième constante (CST_dongle_i') délivrée par le dongle (30) ;
- obtention de la première constante en fonction des données représentatives de ladite première constante préalablement stockées dans la mémoire (22) du terminal utilisateur ;
- comparaison de ladite donnée déterminée en fonction de ladite deuxième constante et d'une donnée déterminée en fonction de la première constante obtenue ;
- en fonction du résultat de ladite comparaison, sélectivement validation ou non validation du mot de passe à valider saisi.

**6.** Procédé de vérification du mot de passe d'un dongle (30) selon la revendication 5, selon lequel les données de ladite première constante préalablement stockées dans la mémoire (22) du terminal utilisateur (20) comprennent au moins une fonction cryptographique (Derive_CST), et la réception de l'ensemble de données comprenant ladite donnée déterminée en fonction de ladite deuxième constante (CST_dongle_i') et délivrée par le dongle (30) déclenche l'application, par le deuxième module de traitement (24) du terminal utilisateur (20) de la fonction cryptographique (Derive_CST) à au moins un élément parmi un identifiant du dongle extrait de l'ensemble de données reçu et une clé de chiffrement système (Kbase) préalablement stocké dans la mémoire (22) du terminal utilisateur.

**7.** Procédé de vérification du mot de passe d'un dongle (30) selon l'une quelconque des revendications 4 à 6, selon lequel, dans une étape de configuration préalable d'un ensemble d'équipements comprenant au moins le dongle et le terminal utilisateur, les étapes suivantes sont mises en œuvre par un dispositif électronique de configuration (10):

- obtention de la première constante associée au dongle ;
- détermination de la première clé symétrique en fonction de la fonction d'obtention de clé symétrique (DERIVE_Ksym) appliqué au mot de passe du dongle ;
- détermination de la première quantité cryptographique (CHIFF_CST_dongle_i) égale au résultat du chiffrement d'une première constante à l'aide du premier algorithme de chiffrement symétrique utilisant la première clé symétrique déterminée ;
- chargement dans la mémoire du dongle de la première quantité cryptographique et de la fonction d'obtention de clé symétrique (DERIVE_Ksym( ; )) ;
- chargement des données représentatives de la première constante dans la mémoire (22) du terminal utilisateur (20).

**8.** Programme d'ordinateur comportant des instructions logicielles qui, lorsqu'elles sont exécutées par un ordinateur, mettent en œuvre les étapes, incombant au premier module de traitement d'un dongle (30), d'un procédé selon l'une quelconque des revendications précédentes.

**9.** Dongle (30) adapté pour être connecté à un terminal utilisateur (20) associé, ledit dongle comprenant un premier module électronique de traitement (31) adapté pour recevoir un mot de passe à valider (mdp') saisi par un utilisateur requérant l'accès au terminal utilisateur quand ledit terminal utilisateur est connecté au dongle,

ledit dongle étant **caractérisé en ce qu'**il comprend en outre une mémoire (32) stockant une première quantité cryptographique (CHIF_CST_dongle_i) égale au résultat du chiffrement en confidentialité seule d'une première constante (CST_dongle_i) à l'aide d'une première clé symétrique (Ksym_i) dérivée cryptographiquement du mot de passe du dongle, la mémoire (32) du dongle (30) stockant en outre la fonction d'obtention de clé symétrique (DERIVE_Ksym( ; )) et **en ce que** le module électronique de traitement du dongle (31) est adapté pour déterminer une deuxième clé symétrique (Ksym_i') par application de ladite fonction (DERIVE_Ksym( ; )) d'obtention de clé symétrique au mot de passe à valider reçu ; le module électronique de traitement du dongle (31) étant adapté pour obtenir une deuxième constante (CST_dongle_i') par déchiffrement de la première quantité cryptographique (CHIFF_CST_dongle_i) stockée dans la mémoire du dongle à l'aide de la deuxième clé symétrique déterminée ;

le dongle étant adapté pour délivrer un ensemble de données, dont une donnée déterminée en fonction de la deuxième constante (CST_dongle_i') à destination du terminal utilisateur, en vue de la validation par ce dernier du mot de passe saisi en fonction dudit ensemble de données et de la première constante (CST_dongle_i).

**10.** Ensemble utilisateur comportant un terminal utilisateur (20) et un dongle (30) selon la revendication 9, dans lequel le terminal utilisateur comprend un deuxième module électronique de traitement (24) et une mémoire dans laquelle ont été préalablement stockées des données représentatives de ladite première constante ; et dans lequel le deuxième module électronique de traitement (24) est adapté pour, lorsqu'un dongle est connecté audit terminal, pour recevoir l'ensemble de données comprenant la donnée déterminée en fonction de ladite deuxième constante (CST_dongle_i') délivrée par le dongle (30), pour obtenir la première constante en fonction des données représentatives de ladite première constante préalablement stockées dans la mémoire (22) du terminal utilisateur ; ledit deuxième module électronique de traitement (24) étant adapté pour comparer ladite donnée déterminée en fonction de ladite deuxième constante et une donnée déterminée en fonction de la première constante obtenue et pour, en fonction du résultat de ladite comparaison, sélectivement valider ou non valider le mot de passe à valider saisi.

**Patentansprüche**

**1.** Überprüfungsverfahren des Passworts eines Dongles (30), umfassend nach der Verbindung des Dongles mit einem assoziierten Benutzerendgerät (20) einen Schritt eines Empfangens, durch ein erstes elektronisches Verarbeitungsmodul des Dongles, eines zu validierenden Passworts (mdp'), das von einem Benutzer eingegeben wird, der den Zugang zum Benutzerendgerät anfordert, wobei das Verfahren **dadurch gekennzeichnet ist, dass** es ferner die folgenden Schritte umfasst, die von dem elektronischen Verarbeitungsmodul (31) des Dongles durchgeführt werden, wobei ein Speicher (32) des Dongles eine erste kryptographische Größe (CHIFF_CST_dongle_i) speichert, die gleich wie das Resultat der Verschlüsselung einer ersten Konstante (CST_dongle_i) mit reiner Vertraulichkeit mittels eines ersten symmetrischen Schlüssels (Ksym_i) ist, der kryptographisch aus dem Passwort des Dongles abgeleitet ist, wobei der Speicher (32) des Dongles (30) ferner die Funktion zum Erlangen eines symmetrischen Schlüssels (DERIVE_Ksym( ; )) speichert:

- Bestimmen eines zweiten symmetrischen Schlüssels (Ksym_i') durch Anwenden der Funktion (DERIVE_Ksym( ; )) zum Erlangen eines symmetrischen Schlüssels auf das empfangene zu validierende Passwort;
- Erlangen einer zweiten Konstante (CST_dongle_i') durch Entschlüsseln der ersten kryptografischen Größe (CHIFF_CST_dongle_i), die in dem Speicher des Dongles gespeichert ist, unter Verwendung des bestimmten zweiten symmetrischen Schlüssels; und
- Liefern, durch den Dongle, eines Datensatzes, darunter Daten, die abhängig von der zweiten Konstante (CST_dongle_i') bestimmt werden, an das Benutzerendgerät, im Hinblick auf die Validierung des abhängig von dem Datensatz und der ersten Konstante (CST_dongle_i) eingegebenen Passworts durch letzteres.

**2.** Überprüfungsverfahren des Passworts eines Dongles (30) nach Anspruch 1, wobei die Funktion zum Erlangen eines symmetrischen Schlüssels (DERIVE_Ksym( ; )) ferner von einer Kennung des Dongles abhängt, und wobei der zweite symmetrische Schlüssel von dem Dongle-Verarbeitungsmodul durch Anwenden der Funktion zum Erlangen eines symmetrischen Schlüssels auf das empfangene zu validierende Passwort und auf die in dem Speicher (32) des Dongles gespeicherte Kennung (id_dongle_i) des Dongles bestimmt wird.

**3.** Überprüfungsverfahren des Passworts eines Dongles (30) nach Anspruch 1 oder 2, wobei die Daten in dem Datensatz, der an das Benutzerendgerät (20) geliefert wird und der abhängig von der zweiten Konstante bestimmt wird, die zweite Konstante umfassen, die mittels eines Sitzungsschlüssels verschlüsselt ist, und wobei der Datensatz in ein spezifisches Datenfeld einer Nachricht eingefügt wird, die von dem Dongle gemäß einem Protokoll zum Erstellen eines Sitzungsschlüssels an das Benutzerendgerät übertragen wird.

**4.** Überprüfungsverfahren des Passworts eines Dongles (30) nach Anspruch 1 oder 2, wobei die Daten in dem Datensatz, der an das Benutzerendgerät (20) geliefert wird, der abhängig von der zweiten Konstante bestimmt wird, ein Integritätsmuster der zweiten Konstante umfassen, die mittels eines Sitzungsschlüssels berechnet wird, und wobei der Datensatz in ein spezifisches Datenfeld einer Nachricht eingefügt wird, die von dem Dongle gemäß einem Protokoll zum Erstellen eines Sitzungsschlüssels an das Benutzerendgerät übertragen wird.

**5.** Überprüfungsverfahren des Passworts eines Dongles (30) nach einem der vorherigen Ansprüche, ferner umfassend die folgenden Schritte, die von einem zweiten elektronischen Verarbeitungsmodul (24) des Benutzerendgeräts (20) ausgeführt werden, wobei Daten, die für die erste Konstante repräsentativ sind, zuvor in einem Speicher (22) des Benutzerendgeräts gespeichert worden sind:

- Empfangen des Datensatzes, umfassend die Daten, die abhängig von der zweiten Konstante (CST_dongle_i') bestimmt werden, die von dem Dongle (30) ausgegeben wird;
- Erlangen der ersten Konstante abhängig von Daten, die für die erste Konstante repräsentativ sind, die zuvor in dem Speicher (22) des Benutzerendgeräts gespeichert wurden;
- Vergleichen der Daten, die abhängig von der zweiten Konstante bestimmt werden, mit den Daten, die abhängig von der erlangten ersten Konstante bestimmt werden;
- abhängig von dem Resultat des Vergleichs, selektives Validieren oder Nicht-Validieren des eingegebenen zu validierenden Passworts.

6. Überprüfungsverfahren des Passworts eines Dongles (30) nach Anspruch 5, wobei die Daten der ersten Konstante, die zuvor in dem Speicher (22) des Benutzerendgeräts (20) gespeichert wurden, mindestens eine kryptografische Funktion (Derive_CST) umfassen, und das Empfangen des Datensatzes, der die Daten umfasst, die abhängig von der zweiten Konstante (CST_dongle_i') bestimmt und von dem Dongle (30) geliefert werden, die Anwendung auslöst, durch das zweite Verarbeitungsmodul (24) des Benutzerendgeräts (20) die kryptografische Funktion (Derive_CST) auf mindestens ein Element aus einer Kennung des Dongles, die aus dem empfangenen Datensatz extrahiert wird, und einem Systemverschlüsselungsschlüssel (Kbase), der zuvor in dem Speicher (22) des Benutzerendgeräts gespeichert wurde.

7. Überprüfungsverfahren des Passworts eines Dongles (30) nach einem der Ansprüche 4 bis 6, wobei in einem Schritt einer vorherigen Konfiguration einer Geräteanordnung, die mindestens den Dongle und das Benutzerendgerät umfasst, die folgenden Schritte von einer elektronischen Konfigurationsvorrichtung (10) durchgeführt werden:

- Erlangen der ersten Konstante, die mit dem Dongle assoziiert ist;
- Bestimmen des ersten symmetrischen Schlüssels abhängig von der Funktion zum Erlangen eines symmetrischen Schlüssels (DERIVE_Ksym), die auf das Dongle-Passwort angewendet wird;
- Bestimmen der ersten kryptografischen Größe (CHIFF_CST_dongle_i), die gleich wie das Resultat der Verschlüsselung einer ersten Konstante mit dem ersten symmetrischen Verschlüsselungsalgorithmus unter Verwendung des bestimmten ersten symmetrischen Schlüssels ist;
- Laden der ersten kryptografischen Menge und der Funktion zum Erlangen eines symmetrischen Schlüssels (DERIVE_Ksym( ; )) in den Speicher des Dongles;
- Laden der Daten, die die erste Konstante darstellen, in den Speicher (22) des Benutzerendgeräts (20).

8. Computerprogramm, umfassend Softwareanweisungen, die, wenn sie von einem Computer ausgeführt werden, die Schritte, die dem ersten Verarbeitungsmodul eines Dongles (30) obliegen, eines Verfahrens nach einem der vorherigen Ansprüche implementieren.

9. Dongle (30), der angepasst ist, um mit einem assoziierten Benutzerendgerät (20) verbunden zu werden, der Dongle umfassend ein erstes elektronisches Verarbeitungsmodul (31), das angepasst ist, um ein zu validierendes Passwort (mdp') zu empfangen, das von einem Benutzer eingegeben wird, der Zugang zu dem Benutzerendgerät anfordert, wenn das Benutzerendgerät mit dem Dongle verbunden ist,

wobei der Dongle **dadurch gekennzeichnet ist, dass** er ferner einen Speicher (32) umfasst, der eine erste kryptografische Größe (CHIFF_CST_dongle_i) speichert, die gleich wie das Resultat der Verschlüsselung einer ersten Konstante (CST_dongle_i) mit reiner Vertraulichkeit mittels eines ersten symmetrischen Schlüssels (Ksym_i) ist, der kryptografisch aus dem Passwort des Dongles abgeleitet ist, wobei der Speicher (32) des Dongles (30) ferner die Funktion zum Erlangen eines symmetrischen Schlüssels (DERIVE_Ksym( ; )) speichert, und dass das elektronische Verarbeitungsmodul des Dongles (31) angepasst ist, um einen zweiten symmetrischen Schlüssel (Ksym i') durch Anwenden der Funktion (DERIVE_Ksym( ; )) zum Erlangen eines symmetrischen Schlüssels auf das empfangene zu validierende Passwort zu bestimmen; wobei das elektronische Verarbeitungsmodul des Dongles (31) angepasst ist, um eine zweite Konstante (CST_dongle_i') durch Entschlüsseln der ersten kryptographischen Größe (CHIFF_CST_dongle_i), die im Speicher des Dongles gespeichert ist, mittels des bestimmten zweiten symmetrischen Schlüssels zu erlangen; wobei der Dongle angepasst ist, um einen Datensatz, darunter Daten, die abhängig von der zweiten Konstante (CST_dongle_i') bestimmt werden, an das Benutzerendgerät zu liefern, im Hinblick auf die Validierung des abhängig von dem Datensatz und der ersten Konstante (CST_dongle_i) eingegebenen Passworts durch letzteres.

10. Benutzeranordnung, umfassend ein Benutzerendgerät (20) und einen Dongle (30) nach Anspruch 9, wobei das Benutzerendgerät ein zweites elektronisches Verarbeitungsmodul (24) und einen Speicher umfasst, in dem zuvor Daten gespeichert wurden, die für die erste Konstante repräsentativ sind; und wobei das zweite elektronische Verarbeitungsmodul (24) angepasst ist, um, wenn ein Dongle mit dem Endgerät verbunden ist, den Datensatz zu empfangen, umfassend Daten, die abhängig von der zweiten Konstante (CST_dongle_i') bestimmt werden, die von dem Dongle (30) geliefert werden, um die erste Konstante abhängig von den repräsentativen Daten der ersten Konstante zu erlangen, die zuvor in dem Speicher (22) des Benutzerendgeräts gespeichert wurden;

wobei das zweite elektronische Verarbeitungsmodul (24) angepasst ist, um die abhängig von der zweiten Konstante bestimmten Daten mit abhängig von der erlangten ersten Konstante bestimmten Daten zu vergleichen und abhängig von dem Resultat des Vergleichs das eingegebene zu validierende Passwort selektiv zu validieren oder nicht zu validieren.

**Claims**

1.  A method for verification of the password of a dongle (30), comprising, following the connection of said dongle to an associated user terminal (20), a step of receipt, by a first electronic processing module for processing the dongle, of a password to be validated (mdp'), entered by a user requesting access to the user terminal, said method being **characterized in that** it further comprises the following steps implemented by the electronic processing module (31) of the dongle, a memory (32) of the dongle storing a first cryptographic quantity (CHIFF _CST _dongle_i) equal to the result of encrypting, in confidentiality only, a first constant (CST_dongle_i) using a first symmetric key (Ksym_i) cryptographically derived from the password of the dongle, the memory (32) of the dongle (30) further storing the obtaining function (DERIVE_Ksym(;)) of the symmetric key:

    - determination of a second symmetric key (Ksym_i') by applying the said obtaining function (DERIVE_Ksym(;)) of a key symmetric to the received password to be validated;
    - obtaining a second constant (CST_dongle_i') by decrypting the first cryptographic quantity (CHIFF_CST_dongle_i) stored in the memory of the dongle using the second determined symmetric key; and
    - delivery by the dongle of a set of data, including a data determined according to the second constant (CST_dongle_i') to the user terminal, with a view to the validation by the latter of the password entered according to the said set of data and the first constant (CST_dongle_i).

2.  The method for verifying the password of a dongle (30) according to claim 1, wherein said symmetric key obtaining function (DERIVE_Ksym(;)) is further dependent on a dongle identifier, wherein said second symmetric key is determined by the processing module of the dongle by applying said symmetric key obtaining function to the received password to be validated and to the identifier (id_dongle_i) of the dongle stored in the memory (32) of the dongle.

3.  The method for verifying the password of a dongle (30) according to claim 1 or 2, wherein said data in the data set delivered to the user terminal (20), which is determined according to the second constant comprises said second constant encrypted with a session key, and wherein said data set is inserted in a specific data field of a message transmitted by the dongle to the user terminal in accordance with a session key establishment protocol.

4.  The method for verifying the password of a dongle (30) according to claim 1 or 2, wherein said data in the data set delivered to the user terminal (20), which is determined according to the second constant, comprises an integrity check value of the second constant calculated using a session key, and wherein said data set is inserted into a specific data field of a message transmitted by the dongle to the user terminal in accordance with a session key establishment protocol.

5.  The method for verifying the password of a dongle (30) according to any of the preceding claims, further comprising the following steps implemented by a second electronic processing module (24) of the user terminal (20), data representatives of said first constant having been previously stored in a memory (22) of the user terminal:

    - receipt of the data set comprising the data determined as a function of said second constant (CST_dongle_i') delivered by the dongle (30);
    - obtaining the first constant as a function of the data showing said first constant previously stored in the memory (22) of the user terminal;
    - comparison of said data determined as a function of said second constant and a data determined as a function of the first obtained constant;
    - depending on the result of said comparison, selectively validating or not validating the entered password to be validated.

6. The method for verifying the password of a dongle (30) according to claim 5, according to which the data of said first constant previously stored in the memory (22) of the user terminal (20) comprise at least one cryptographic function (Derive_CST), and the receipt of the set of data comprising said data determined as a function of said second constant (CST_dongle_i') and delivered by the dongle (30) triggers the application, by the second processing module (24) of the user terminal (20) of the cryptographic function (Derive_CST) to at least one element among an identifier of the dongle extracted from the data set received and a system encryption key (Kbase) previously stored in the memory (22) of the user terminal.

7. The method for verifying the password of a dongle (30) according to any one of claims 4 to 6, wherein, in a step of preconfiguring a set of equipment comprising at least the dongle and the user terminal, the following steps are implemented by an electronic configuration device (10):

   - obtaining the first constant associated with the dongle;
   - determining the first symmetric key according to the symmetric key obtaining function (DERIVE_Ksym) applied to the password of the dongle;
   - determining the first cryptographic quantity (CHIFF_CST_dongle_i) equal to the result of encrypting a first constant applying the first symmetric encryption algorithm using the first symmetric key determined;
   - loading the memory of the dongle with the first cryptographic quantity and the symmetric key obtaining function (DERIVE_Ksym(;));
   - loading the data representing the first constant into the memory (22) of the user terminal (20).

8. A computer program comprising software instructions which, when executed by a computer, implement the steps incumbent on the first dongle processing module (30), of a method according to any of the preceding claims.

9. A dongle (30) adapted to be connected to an associated user terminal (20), said dongle comprising a first electronic processing module (31) adapted to receive a password to be validated (mdp') entered by a user requesting access to the user terminal when said user terminal is connected to the dongle,

   said dongle being **characterized in that** it further comprises a memory (32) storing a first cryptographic quantity (CHIFF _CST _dongle_i) equal to the result of encrypting, in confidentiality only, a first constant (CST_dongle_i) using a first symmetric key (Ksym_i) cryptographically derived from the password of the dongle, with the memory (32) of the dongle (30) further storing the symmetric key obtaining function (DERIVE_Ksym(;)) and **in that** the electronic module for processing the dongle (31) is adapted to determine a second symmetrical key (Ksym_i') by applying said obtaining function (DERIVE_Ksym(;)) for obtaining a symmetrical key to the password received to be validated;
   the electronic processing module of the dongle (31) being adapted to obtain a second constant (CST_dongle_i') by decrypting the first cryptographic quantity (CHIFF_CST_dongle_i) stored in the memory of the dongle using the second symmetric key determined;
   the dongle being adapted to deliver a set of data, including a data determined as a function of the second constant (CST_dongle_i') to the user terminal, with a view to validation by the latter of the password entered as a function of said set of data and of the first constant (CST_dongle_i).

10. An user assembly comprising a user terminal (20) and a dongle (30) according to claim 9, wherein the user terminal comprises a second electronic processing module (24) and a memory in which data showing said first constant have been previously stored; and wherein the second electronic processing module (24) is adapted to, when a dongle is connected to said terminal, receive the set of data comprising the data determined as a function of said second constant (CST_dongle_i') delivered by the dongle (30), to obtain the first constant as a function of the data representative of said first constant previously stored in the memory (22) of the user terminal;
   said second electronic processing module (24) being adapted to compare said data determined as a function of said second constant and a data determined as a function of the first constant obtained and to, depending on the result of said comparison, selectively validate or not validate the entered password to be validated.

**FIG.1**

## FIG.2

100

CALC CST_dongle_i = Derive_CST (Kbase, id_dongle_i)

101

CALC CHIFF_CST_dongle_i = Derive_CLE (CST_dongle_i)

102

CONFIG

103

## FIG.3

TERMINAL 20

DONGLE 30

200

mdp' — 201

202

DECHIFF(CHIFF_CST_dongle_i) = CST_dongle_i' — 203

CALC(CHIFF_CST_dongle_i')$_{Ksession}$ — 204

(id_dongle_i, CST_dongle_i')$_{Ksession}$ — 205

CST_dongle_i = Derive_CST(Kbase, id_dongle_i) — 206

(CST_dongle_i') $\overset{?}{=}$ (CST_dongle_i) — 207

OK / KO — 208

<u>FIG.4</u>

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 201103722 A1
- US 10469487 B1

- WO 2017117520 A1